Europäisches Patentamt

European Patent Office

Office européen des brevets

(11) Veröffentlichungsnummer: **0 296 487 B1**

(12) **EUROPÄISCHE PATENTSCHRIFT**

(45) Veröffentlichungstag der Patentschrift: 06.11.91

(21) Anmeldenummer: 88109630.9

(22) Anmeldetag: 16.06.88

(51) Int. Cl.⁵: **C08J 3/07**, C08K 5/25,
C08L 33/06, C09D 133/04,
//(C08L33/06,33:06)

(54) **Lagerstabile wässrige Polymerdispersionen.**

(30) Priorität: 24.06.87 DE 3720859

(43) Veröffentlichungstag der Anmeldung:
28.12.88 Patentblatt 88/52

(45) Bekanntmachung des Hinweises auf die
Patenterteilung:
06.11.91 Patentblatt 91/45

(84) Benannte Vertragsstaaten:
AT BE CH DE ES FR GB IT LI NL SE

(56) Entgegenhaltungen:
EP-A- 0 015 644
FR-A- 2 301 578
GB-A- 1 421 130
US-A- 4 210 565

(73) Patentinhaber: BASF Aktiengesellschaft
Carl-Bosch-Strasse 38
W-6700 Ludwigshafen(DE)

(72) Erfinder: Auchter, Gerhard, Dr.
Gute Erde 13
W-6800 Mannheim 31(DE)
Erfinder: Schwerzel, Thomas, Dr.
Budapester Strasse 51
W-6700 Ludwigshafen(DE)
Erfinder: Blum, Rainer
Bannwasserstrasse 58
W-6700 Ludwigshafen(DE)
Erfinder: Neubert, Gerhard, Dr.
Panoramastrasse 11
W-6719 Battenberg(DE)
Erfinder: Wistuba, Eckehardt, Dr.
Im Obergarten 7
W-6702 Bad Duerkheim(DE)
Erfinder: Osterloh, Rolf, Dr.
Am Kapellenbusch
W-5042 Erftstadt(DE)

**Beschreibung**

Die vorliegende Erfindung betrifft lagerstabile wäßrige Polymerdispersionen, erhältlich durch Dispergierung eines Gemisches zweier Copolymerisate, von denen mindestens eines eine copolymerisierbare Carbonylverbindung als Aufbaukomponente enthält, unter Mitverwendung von Polyhydraziden als Vernetzungsmittel, ein Verfahren zur Herstellung derartiger Dispersionen und ihre Verwendung zur Herstellung von Lacken und Beschichtungsmitteln.

Wäßrige Polymerdispersionen, die Carbonylgruppen enthalten und mittels Polyhydraziden vernetzt werden können, sind bekannt und werden z.B. in der EP-0 003 516 beschrieben. Diese Dispersionen werden nach dem Verfahren der Emulsionspolymerisation (hierbei entstehen Primärdispersionen) hergestellt, bei dem hydrophile Hilfsstoffe (Emulgatoren) eingesetzt werden, wodurch eine relativ hohe Wasseraufnahme der aus den Dispersionen hergestellten Filme resultiert.

Aus der US-A- 4 210 565 sind durch Emulsionspolymerisation hergestellte wäßrige Dispersionen bekannt, welche zwei unterschiedliche Copolymere enthalten, von denen ein Copolymer Carbonylgruppen aufweist. Das zweite Copolymer wird in Gegenwart des Copolymeren mit Carbonylgruppen hergestellt. Zusätzlich enthalten die Dispersionen Hydrazide oder Hydrazone als Vernetzer.

Die DE-OS 35 36 261 beschreibt in wäßrigen Lösungen oder Dispersionen lagerstabile polymere Zusammensetzungen, die durch Umsetzung von polymeren organischen Verbindungen mit Carboxyl- und Carbonylgruppen mit Polyhydraziden in Gegenwart von Monoketonen und/oder Monoaldehyden erhältlich sind und die nach zumindest teilweiser Neutralisation der Carbonylgruppen in Wasser löslich bzw. dispergierbar sind. Die auf diese Weise hergestellten Dispersionen werden als Sekundärdispersionen bezeichnet. Um eine ausreichende Lagerstabilität zu erhalten, werden beträchtliche Mengen an flüchtigen Monoketonen und/oder Monoaldehyden benötigt, die beim Trocknen verdunsten. Dies ist aus geruchlichen und toxikologischen Gründen nicht erwünscht. Infolge des Gehalts an organischen Lösemitteln trocknen die Beschichtungen zudem in dicker Schicht nur sehr langsam durch.

Aufgabe der vorliegenden Erfindung war es daher, wäßrige Polymerdispersionen herzustellen, die lagerstabil, emulgatorfrei und frei von flüchtigen Monoketonen und/oder Monoaldehyden sind und die beim Auftrocknen vernetzte, blockfeste und mit organischen Lösungsmitteln nicht vollständig wieder auflösbare Filme ergeben.

Gegenstand der vorliegenden Erfindung sind lagerstabile wäßrige Polymerdispersionen, erhältlich durch Dispergierung eines Gemisches aus 15 - 50 Gew.% eines Copolymerisates (A) aus

(I) 1,5 - 15 Gew.% copolymerisierbarer Verbindungen mit 3 bis 10 Kohlenstoffatomen, die eine Carboxyl- oder Carbonsäureanhydridgruppe enthalten,

(II) 30 - 98,5 Gew.% C-1- bis C-20-Alkylacrylate oder -methacrylate,

(III) 0 - 60 Gew.% Vinylaromaten,

(IV) 0 - 20 Gew.% copolymerisierbarer Carbonylverbindungen,

(V) 0 - 20 Gew.% weiterer, unter (I) bis (IV) nicht genannter copolymerisierbarer organischer Verbindungen und

50 - 85 Gew.% eines Copolymerisates (B) aus

40 - 100 Gew.% der Monomeren (II) und

0 - 60 Gew.% eines oder mehrerer der Monomeren (III) bis (V)

mit der Maßgabe, daß die Copolymerisate (A) und (B) zusammen bis zu 65 Gew.% solcher Alkyl-(meth)acrylate (II) als Aufbaukomponente enthalten, deren Homopolymerisate Glastemperaturen unter 0 °C aufweisen und daß mindestens eines der Copolymerisate (A) oder (B) die Monomeren (IV) als Aufbaukomponente enthält, das Gemisch in einem organischen Lösungsmittel in der Weise hergestellt wird, daß zunächst einer des beiden Copolymerisate (A) oder (B) durch Lösungspolymerisation der Aufbaukomponenten hergestellt wird, in der so entstandenen Polymerlösung das andere Copolymerisat durch Lösungspolymerisation erzeugt wird, die Polymermischung dann unter Zusatz von Ammoniak in Wasser dispergiert wird, gegebenenfalls überschüssiges Lösemittel abdestilliert wird und die Dispersion anschließend mit mindestens einem Polyhydrazid (C) versetzt wird.

Gegenstand der vorliegenden Erfindung ist auch ein Verfahren zur Herstellung der wäßrigen Polymerdispersionen sowie deren Anwendung zur Herstellung von Lacken und Beschichtungsmitteln.

Zu den Aufbaukomponenten der Copolymerisate (A) bzw. (B) ist folgendes auszuführen:

Als Komponente (I) kommen copolymerisierbare olefinisch ungesättigte. 3 bis 10 Kohlenstoffatome enthaltende organische Verbindungen mit mindestens einer Carboxyl- oder Carbonsäureanhydridgruppe in Frage, wie Acrylsäure, Methacrylsäure, Maleinsäure, Itaconsäure bzw. die Anhydride oder Halbester der Dicarbonsäuren. Die Anhydridgruppen der Copolymerisate können vor dem Neutralisieren mit Ammoniak, beispielsweise durch Erwärmen mit 1 bis 8 Kohlenstoffatome enthaltenden Alkoholen oder Glykolethern in die entsprechenden Halbestergruppen überführt werden. Beispiele für solche Alkohole bzw. Glykolether sind Ethanol, Isopropanol, Butanol und Butylglykol, Bevorzugte Komponenten (I) sind Acrylsäure, Methacrylsäure und Itaconsäure. Komponente (I) ist im Copolymerisat (A) in Mengen von 1,5 bis 15, vorzugsweise 5 bis 12 Gew.% einpolymerisiert.

Als Ester der Acrylsäure oder Methacrylsäure (II) mit 1 bis 20 Kohlenstoffatome enthaltenden gradkettigen oder verzweigten Monoalkanolen eignen sich z.B. Methylacrylat, Ethylacrylat, Isopropylacrylat, Methylmethacrylat, n-Butylacrylat, n-Butylmethacrylat, Isobutylacrylat, Isobutylmethacrylat, tert.-Butylacrylat, 2-Ethylhexylacrylat, 2-Ethylhexylmethacrylat, Laurylacrylat sowie deren Gemische. Bevorzugt sind n-Butylacrylat und Methylmethacrylat. Komponente (II) ist im Copolymerisat (A) zu 30 bis 98,5 Gew.%, bevorzugt 45 bis 95 Gew.% enthalten.

Als Komponente (III) werden Vinylaromaten mit 8 bis 12 Kohlenstoffatomen wie Styrol, Methylstyrol, Vinyltoluole, t-Butylstyrol und Halogenstyrole eingesetzt. Bevorzugt ist Styrol. Komponente (III) kann im Copolymerisat (A) bis zu 60 Gew.% mitverwendet werden. Für den Fall der Mitverwendung haben sich 20 bis 45 Gew.% bewährt.

Geeignete copolymerisierbare Carbonylgruppen-haltige Verbindungen (IV) sind z.B. α,β-monoolefinisch ungesättigte Aldehyde und/oder Ketone wie Acrolein, Methacrolein, Vinylalkylketone mit 1 bis 20 Kohlenstoffatomen im Alkylrest, Formylstyrol, (Meth)acryloxyalkanale und -alkanone, deren Herstellung z.B. in der DE-OS 27 22 097 beschrieben ist, N-Oxoalkyl-(methacrylamide), wie sie u.a. in der US-PS 4 226 007, der DE-OS 20 61 213 oder der DE-OS 22 07 209 beschrieben sind, z.B. N-3-Oxobutyl-acrylamid und -methacrylamid, N-1,1-Dimethyl-3-oxobutyl-(meth)acrylamid, Diaceton(meth)acrylamid, sowie N-3-Oxo-1,1-dibutyl-2-propyl-hexylacrylamid, ferner Acetonyl- und Diaceton(meth)acrylat oder Acrylamidopivalinaldehyd oder Gemische dieser Comonomeren. Bevorzugt werden 3-Oxoalkyl(meth)-acrylate und N-3-Oxoalkyl(meth)acrylamide. Komponente (IV) kann im Copolymerisat (A) bis zu 20 Gew.% enthalten sein. Im Fall der Mitverwendung ist eine Menge von 2 bis 15 Gew.% bevorzugt.

Bei der Komponente (V) handelt es sich um weitere, unter (I) bis (IV) nicht genannte, copolymerisierbare olefinisch ungesättigte Verbindungen. Es sind dies beispielsweise Mono(meth)acrylate von Alkandiolen, wie Hydroxyethyl- und Hydroxypropyl-(meth)acrylat sowie Butandiolmono(meth)acrylat, (Meth)acrylamid und/oder (Meth)acrylnitril. Diese Monomere können, falls erforderlich zur Einstellung spezieller Eigenschaften dienen. Als Komponente (V) können noch vorhanden sein: Vinylether, Vinylester, Diester der Maleinsäure, Itaconsäure, Citraconsäure oder Mesaconsäure mit, gegebenenfalls Ether- oder Thioether-Gruppen enthaltenden, Monoalkoholen mit 1 bis 20 Kohlenstoffatomen. Weiterhin können als Komponente (V) Monoolefine mit 3 bis 20 Kohlenstoffatomen wie Propen, Buten, Penten, Hexen, Isobuten und Diolefine wie Butadien und Isopren verwendet werden. Es ist bekannt, daß polare funktionelle Gruppen wie sie in der Komponente (V) enthalten sein können, z.B. Hydroxy-oder Ethergruppen, Polymerdispersionen zusätzlich stabilisieren. Die erfindungsgemäßen Dispersionen benötigen jedoch eine solche zusätzliche Stabilisierung nicht. In Komponente (V) enthaltene polare Gruppen können jedoch die Wasserbeständigkeit der aus den erfindungsgemäßen Dispersionen erhaltenen Filme ungünstig beeinflussen. In der bevorzugten Ausführungsform der Erfindung wird Komponente (V) daher nicht mitverwendet.

Das Copolymerisat (B) enthält die Aufbaukomponente (I) nicht. Die Komponente (II) ist im Copolymerisat (B) zu 40 bis 100 Gew.%, bevorzugt 45 bis 98 Gew.% enthalten, die übrigen Komponenten (III) bis (V) sind zu 0 bis 60, im Fall der Mitverwendung bevorzugt zu 2 bis 55 Gew.% enthalten.

Das Gemisch der Copolymerisate besteht zu 15 bis 50 Gew.% aus Copolymerisat (A) und 50 bis 85 Gew.% aus Copolymerisat (B), bevorzugt sind 25 bis 50 Gew.% (A) und 50 bis 75 Gew.% (B). Damit die Polymerdispersioner nach der Verfilmung klebfreie Beschichtungen ergeben, werden bis zu 65 Gew.%, bezogen auf die Gesamtmenge der zur Herstellung der Copolymerisate (A) und (B) verwendeten Komponenten (I) bis (V), solche Alkyl-(meth)acrylate (II) verwendet, deren Homopolymerisate Glastemperaturen unter 0°C aufweisen. Die Glastemperaturen von Homopolymerisaten sind beispielsweise in J. Brandrup, E.H. Immergut "Polymer Handbook", Wiley-Interscience, 2. Ed., 1975, III-139ff. angegeben.

Weiterhin enthält entweder das Copolymerisat (A) oder (B) oder beide die Aufbaukomponente (IV), damit eine Vernetzung durch die Polyhydrazide möglich ist.

Die Copolymerisate (A) und (B) der erfindungsgemäßen Dispersionen werden durch Polymerisation in organischer Lösung hergestellt. Das Verfahren der Lösungspolymerisation ist dem Fachmann grundsätzlich bekannt, so daß auf die für die jeweiligen Aufbaukomponenten geeigneten Bedingungen hier nicht näher eingegangen zu werden braucht. Die Polymerisation erfolgt zweckmäßigerweise in Gegenwart von 0,3 bis 5, vorzugsweise 0,5 bis 3 Gew.%, bezogen auf die Summe der Monomeren, radikalbildender Initiatoren wie Azobiscarbonsäureamiden, Azobiscarbonsäurenitrilen oder Peroxiden im allgemeinen bei Temperaturen zwischen 50 und 150°C, vorzugsweise zwischen 80 und 130°C gegebenenfalls in Gegenwart von Reglern wie Mercaptoethanol, tert.-Dodecylmercaptan oder Diisopropylxanthogendisulfid, die in Mengen von 0 bis 3 Gew.%, bezogen auf die Summe der Monomeren vorhanden sein können. Als organische Lösemittel kommen grundsätzlich alle gebräuchlichen Lösemittel, die das erfindungsgemäße Copolymerisat lösen, in Betracht. Ein Gehalt an Lösemittel ist für die Stabilisierung und die positiven Eigenschaften der erfindungsgemäßen Dispersionen nicht erforderlich und es ist daher aus Gründen des Umweltschutzes sinnvoll, den Gehalt an Lösemitteln möglichst klein zu wählen. Zweckmäßigerweise werden Lösemittel verwendet, die sich aufgrund ihres Siedepunktes und/oder Azeotropbildung mit Wasser leicht aus den erfindungsgemäßen Dispersionen abdestillieren lassen. Besonders bevorzugt sind Butanol, Isobutanol, Propanol, Ethanol und Toluol.

Es ist an sich nicht von Bedeutung, ob zuerst die Komponente (A) und dann die Komponente (B) polymerisiert wird oder ob umgekehrt vorgegangen wird. In einer bevorzugten Ausführungsform der Erfindung wird jedoch zunächst die Komponente (A) und anschließend die Komponente (B) polymerisiert. Beide Komponenten ergeben eine homogene Mischung. Die zuerst hergestellte Komponente wird weitgehend, d.h. zu mehr als 95 %, vorzugsweise 99 % polymerisiert, bevor mit der Polymerisation der 2. Komponente begonnen wird. Durch Restmonomere aus der 1. Komponente, insbesondere Säuregruppen-haltige, könnte sich die Zusammensetzung der 2. Komponente verändern, was zu einer Verschlechterung der anwendungstechnischen Eigenschaften führen könnte. Dispersionen, die analog zu den erfindungsgemäßen aus zwei getrennt hergestellten und dann gemischten Copolymerisaten (A) und (B) hergestellt werden, weisen im allgemeinen ungünstigere anwendungstechnische Eigenschaften auf, wie z.B. geringere Stabilität und ungünstigeres Fließverhalten, Zudem würde das Mischen einen zusätzlichen Arbeitsgang erfordern.

Die Lösungen der auspolymerisierten Copolymerisate (A) und (B) werden entweder durch Zumischen von Ammoniak und Verdünnen mit Wasser in Dispersionen überführt, oder man rührt die auspolymerisierte Copolymerisatlösung langsam in eine wäßrige Ammoniaklösung ein und erhält dadurch eine Dispersion. Aus den so erhaltenen Dispersionen wird das organische Lösungsmittel destillativ auf eine Konzentration von < 5 Gew.% entfernt, wobei das Lösemittel zurückgewonnen werden kann. Der Neutralisationsgrad der erfindungsgemäßen Dispersionen betragt 10 bis 150 %, vorzugsweise 15 bis 100 %, besonders bevorzugt 40 bis 70 %. Der pH-Wert der Dispersionen kann danach zwischen etwa 6.8 und 10, vorzugsweise zwischen 7,0 und 9 betragen. Von dem als Neutralisationsmittel dienenden Ammoniak kann, zur Erzielung bestimmter Effekte, ein geringer Teil, zweckmäßig nicht mehr als 25 Mol.%., vorzugsweise nicht mehr als 10 Mol.% des für die Neutralisation erforderlichen Ammoniaks durch organische Amine, insbesondere Triethylamin, ersetzt werden. Solche Zusätze können die Wasserfestigkeit der Dispersionsfilme beeinträchtigen. Der Polymerisationsgrad der erfindungsgemäßen Dispersionen wird zweckmäßigerweise so gewählt, daß sich eine für den Verarbeiter günstige Viskosität ergibt. Der Polymerisatgehalt beträgt deshalb 35 bis 60 Gew.%, vorzugsweise 40 bis 55 Gew.%.

Geeignete Polyhydrazide (C) sind z.B. Dihydrazide organischer Di- oder Oligocarbonsäuren. Als Beispiele seien genannt Malonsäure-, Bernsteinsäure-, Glutarsäure-, Adipinsäure-, Pivalinsäure-, Korksäure-, Azelainsäure-, Sebacinsäure- und Decandisäure-, Dodecandisäure-, Tridecandisäure-, Tetradecandisäure-, Pentadecandisäure-, Hexadecandisäure-, 2-Methyl-tetradecandisäuredihydrazid, ferner Methyl-, Ethyl-, Propyl-, Butyl-, Hexyl-, Heptyl-, Octyl-, 2-Ethylhexyl-, Nonyl-, Decyl-, Undecyl- und Dodecylmalonsäuredihydrazid, Methyl-, Ethyl-, Propyl-, Butyl-, Hexyl-, Heptyl-, Octylbernsteinsäuredihydrazid, 2-Ethyl-3-propylbernstein- und -glutarsäuredihydrazid, Cyclohexandicarbonsäure- und Cyclohexylmethylmalonsäure-dihydrazid, Terephtalsäure-, Phenylbernsteinsäure-, Cinnamylmalonsäure- und Benzylmalonsäuredihydrazid, Pentan-1,3,5-Tricarbonsäuretrihydrazid, Hex-4-en-1,2,6-Tricarbonsäuretrihydrazid, 3-CyanPentan-1,3,5-Tricarbonsäuretrihydrazid, Dicyanfumarsäuredihydrazid, ferner die Di- bzw. Oligohydrazide von dimerisierten bzw. oligomerisierten ungesättigten Fettsäuren. Bevorzugt ist Adipinsäuredihydrazid.

Das Polyhydrazid wird den erfindungsgemäßen Polymerdispersionen zweckmaßigerweise nach dem Abdestillieren des überschüssigen organischen Lösungsmittels in fester Form oder als wäßrige Lösung oder Aufschlämmung hinzugefügt und eingerührt.

Das Polyhydrazid (C) kann in Mengen von 0,1 bis 1 Äquivalent Polyhydrazid pro Äquivalent Carbonylgruppen im Copolymerisat-Gemisch (A und B) verwendet werden.

Die erfindungsgemäßen Dispersionen sind überraschenderweise trotz der möglichen Reaktion zwischen Hydrazid- und Carbonylgruppen, die zur Vernetzung führt, lagerstabil, d.h. sie neigen auch bei längerer Lagerung nicht zur Zweiphasenbildung, noch verändert sich bei der Lagerung Viskosität und Verfilmungsverhalten nennenswert.

Nach Auftrag auf ein Substrat und Auftrocknen ergeben sich jedoch bereits bei Raumtemperatur vernetzte Filme, die in Lösemitteln nicht mehr vollständig aufgelöst werden können. Durch erhöhte Temperatur werden Trocknung und Vernetzung beschleunigt. Die Wasserbeständigkeit der Dispersionsfilme nimmt mit steigendem Hydrazidanteil, bezogen auf die Carbonylkomponente, leicht ab, ist jedoch auch noch bei Äquivalentverhältnis 1, bezogen auf Carbonylkomponente, deutlich höher als die einer normalen Seifen- oder Schutzkolloiddispersion. Die Verarbeitung der Dispersionen kann mit den üblichen Auftragsaggregaten erfolgen, die Viskosität kann durch Verdicken mit handelsüblichen Verdickern oder Verdünnen mit Wasser an das jeweilige Auftragssystem angepaßt werden.

Sie eignen sich als Beschichtungen schützender und/oder dekorativer Art auf harten und weichen Substraten z.B. Metall, Leder, Papier und/oder Kunststoffen.

Beispiel 1

a) Herstellung des Copolymerisates (A)
In einem Reaktionsgefäß wurden 440 g Ethanol sowie eine Drittel einer Mischung aus 880 g Styrol, 1100 g n-Butylacrylat, 220 g Acrylsäure, 66 g tert.-Butylperoctoat und 330 g Ethanol vorgelegt. Die Vorlage wurde auf Rückflußtemperatur aufgeheizt und der Rest der Mischung gleichmäßig innerhalb von 2,5 h bei dieser Temperatur zugegeben. Anschließend wurde noch 4 h bei Rückflußtemperatur polymerisiert.
b) Herstellung des Gemisches der Copolymerisate (A) und (B)
Eine Vorlage von 50 g Ethanol und 486 g der unter a) beschriebenen Lösung wurde auf Rückflußtemperatur erhitzt. Dann wurde eine Mischung aus 189 g Styrol, 275 g n-Butylacrylat, 72 g Diacetonacrylamid, 9,7 g tert.-Butylperoctoat und 49 g Ethanol gleichmäßig in 3 h zugegeben. Danach wurde noch 5 h bei Rückflußtemperatur polymerisiert, wobei zweimal nach jeweils 1 h 2,2 g tert.-Butylperoctoat zugegeben wurde. Die entstandene Polymerlösung wies einen K-Wert (nach DIN 53 726) von 31 und eine Säurezahl (nach DIN 53 402) von 30,4 mg KOH/g Feststubstanz auf.
C) Herstellung der Dispersionen
Das unter b) beschriebene Gemisch der Copolymerisate (A) und (B) wurde mit 32,8 g 25 gew.%iger wäßriger Ammoniaklösung versetzt. Anschließend wurde unter kräftigem Rühren 650 g Wasser zugegeben. Aus der entstandenen Dispersion wurde dann im Vakuum 370 g Ethanol-Wasser-Gemisch abdestilliert, wobei während der Destillation 320 g Wasser zugegeben wurden. Nach Beendigung der Destillation wurde bei Raumtemperatur 35,2 g Adipinsäuredihydrazid zugegeben und 4 h eingerührt. Die Dispersion zeigte folgende Daten:
Feststoffgehalt: 47,3 Gew.%
pH-Wert: 8,4
Ethanolgehalt: 1,3 Gew.%
Viskosität

(Rotationsviskosimeter, 23° C): 250 mPas
Eine Probe der Dispersion wurde auf eine Glasplatte aufgebracht und 60 h bei Raumtemperatur getrocknet. Es ergab sich ein 54 μm dicker klarer Film mit einer Pendelhärte (nach DIN 53 157) von 108 s, der mit Aceton nicht wieder vollständig aufgelöst werden konnte.

Beispiel 2

a) Herstellung des Copolymerisates (A)
In einem Reaktionsgefäß wurden 231 g Isobutanol sowie die Hälfte einer Mischung aus 165 g Methylmethacrylat, 120 g n-Butylacrylat, 28 g Acrylsäure, 23 g Diacetonacrylamid, 1,2 g tert.-Butylperoctoat, 1,2 g tert.-Butylperbenzoat und 25 g Isobutanol vorgelegt. Die Vorlage wurde auf Rückflußtemperatur aufgeheizt und der Rest der Mischung wurde gleichmäßig innerhalb einer Stunde bei Rückflußtemperatur zugegeben. Anschließend wurde noch 2 h bei Rückflußtemperatur polymerisiert.
b) Herstellung des Gemisches der Copolymerisate (A) und (B)
Zu der unter a) beschriebenen Lösung wurde bei Rückflußtemperatur innerhalb von 2 h gleichmäßig eine Mischung von 231 g Methylmethacrylat, 200 g n-Butylacrylat, 33 g Diacetonacrylamid, 5,6 g tert.-Butylperoctoat und 85 g Isobutanol hinzugegeben. Danach wurde noch 3 h bei Rückflußtemperatur polymerisiert.
c) Herstellung der Dispersion
Das unter b) beschriebene Gemisch der Copolymerisate (A) und (B) wurde mit 25 g 25 gew.%iger wäßriger Ammoniaklösung versetzt. Anschließend wurde unter kräftigem Rühren 1300 g Wassser zugegeben. Aus der so entstandenen Dispersion wurde im Vakuum so lange eine Isobutanol-Wasser-Gemisch abdestilliert, bis sich ein Gehalt an nichtflüchtigen Anteilen von 40 Gew.% ergab. Nach Beendigung der Destillation wurden bei Raumtemperatur 25,9 g Adipinsäuredihydrazid zugegeben und 2 h eingerührt. Die Dispersion wurde durch folgende Daten charakterisiert:
Feststoffgehalt: 40,3 Gew.%
pH-Wert: 7,9
Isobutanolgehalt: 1,3 Gew.%
Viskosität
(Rotationsviskosimeter, 23° C): 850 mPas
Eine Probe der Dispersion wurde auf eine Glasplatte aufgerakelt und 60 h bei Raumtemperatur getrocknet. Es ergab sich ein 60 μm dicker klarer Film mit einer Pendelhärte (nach DIN 53 157) von 128 s, der mit Aceton nicht wieder vollständig aufgelöst werden konnte.

Beispiel 3

a) Herstellung des Copolymerisates (A)

In einem Reaktionsgefäß wurden 440 g Ethanol und 944 g einer Mischung aus 836 g Styrol, 264 g Acrylsäure, 1100 g n-Butylacrylat, 66 g tert.-Butylperoctoat und 330 g Ethanol vorgelegt. Die Vorlage wurde auf Rückflußtemperatur erhitzt und der Rest der Mischung gleichmäßig innerhalb von 2,5 h zugegeben. Anschließend wurde noch 4 h bei Rückflußtemperatur polymerisiert.

b) Herstellung des Gemisches der Copolymerisate (A) und (B)

714 g der unter a) beschriebenen Lösung wurden auf Rückflußtemperatur erhitzt. Innerhalb von 3 h wurde eine Mischung aus 200 g Styrol, 240 g n-Butylacrylat, 60 g Diacetonacrylamid, 200 g Ethanol und 10 g tert.-Butylperoctoat zugetropft. Dann wurde noch 3 h bei Rückflußtemperatur polymerisiert.

c) Herstellung der Dispersion

Das unter b) beschriebene Gemisch der Copolymerisate (A) und (B) wurde mit 56,6 g 25 gew.%iger wäßriger Ammoniaklösung versetzt. Anschließend wurde unter kräftigem Rühren 980 g Wasser zugegeben. Es entstand eine Dispersion aus der im Vakuum 540 g Ethanol-Wasser-Gemisch abdestilliert wurde. Nach Beendigung der Destillation wurde 15,4 g Adipinsäuredihydrazid eingerührt und mit Wasser auf einen Gehalt an nicht-flüchtigen Anteilen von 41,3 Gew.% eingestellt. Weitere Daten der Dispersion:

pH-Wert: 8,4

Ethanolgehalt: 0,8 Gew.%

Viskosität

(Rotationsviskosimeter, 23 °C): 360 mPas

Eine Probe der Dispersion wurde auf eine Glasplatte aufgerakelt und 60 h bei Raumtemperatur getrocknet. Der entstandene Film wies eine Pendelhärte nach DIN 53 157 von 76 s auf und konnte mit Aceton nicht vollständig aufgelöst werden.

**Patentansprüche**

1. Lagerstabile wäßrige Polymerdispersionen, erhältlich durch Dispergierung eines Gemisches aus

    15 - 50 Gew.% eines Copolymerisates (A) aus

    (I) 1.5 - 15 Gew.% copolymerisierbarer Verbindungen mit 3 bis 10 Kohlenstoffatomen, die eine Carboxyl- oder Carbonsäureanhydridgruppe enthalten,
    (II) 30 - 98,5 Gew.% C-1- bis C-20-Alkylacrylate oder -methacrylate,
    (III) 0 - 60 Gew.% Vinylaromaten,
    (IV) 0 - 20 Gew.% copolymerisierbarer Carbonylverbindungen,
    (V) 0 - 20 Gew.% weiterer, unter (I) bis (IV) nicht genannter copolymerisierbarer organischer Verbindungen und

    50 - 85 Gew.% eines Copolymerisates (B) aus

    40 - 100 Gew.% der Monomeren (II) und

    0 - 60 Gew.% eines oder mehrerer der Monomeren (III) bis (V)

    mit der Maßgabe, daß die Copolymerisate (A) und (B) zusammen bis zu 65 Gew.% solcher Alkyl(meth)acrylate (II) als Aufbaukomponente enthalten. deren Homopolymerisate Glastemperaturen unter 0 °C aufweisen und daß mindestens eines der Copolymerisate (A) oder (B) die Monomeren (IV) als Aufbaukomponente enthält, das Gemisch in einem organischen Lösungsmittel in der Weise hergestellt wird, daß zunächst eines der beiden Copolymerisate (A) oder (B) durch Lösungspolymerisation der Aufbaukomponenten hergestellt wird, in der so entstandenen Polymerlösung das andere Copolymerisat durch Lösungspolymerisation erzeugt wird, die Polymermischung dann unter Zusatz von Ammoniak in Wasser dispergiert wird, gegebenenfalls überschüssiges Lösemittel abdestilliert wird und die Dispersion anschließend mit mindestens einem Polyhydrazid (C) versetzt wird.

2. Verfahren zur Herstellung einer wäßrigen Polymerdispersion nach Anspruch 1, dadurch gekennzeichnet, daß in einem organischen Lösungsmittel ein Gemisch aus

    15 - 50 Gew.% eines Copolymerisates (A) aus

    (I) 1,5 - 15 Gew.% copolymerisierbarer Verbindungen mit 3 bis 10 Kohlenstoffatomen, die eine Carboxyl- oder Carbonsäureanhydridgruppe enthalten.
    (II) 30 - 98,5 Gew.% C-1- bis C-20-Alkylacrylate oder -methacrylate,
    (III) 0 - 60 Gew.% Vinylaromaten,
    (IV) 0 - 20 Gew.% copolymerisierbarer Carbonylverbindungen,
    (V) 0 - 20 Gew.% weiterer, unter (I) bis (IV) nicht genannter copolymerisierbarer organischer Verbindungen und

    50 - 85 Gew.% eines Copolymerisates (B) aus

    40 - 100 Gew.% der Monomeren (II) und

0 - 60 Gew.% der Monomeren (III) bis (V) mit der Maßgabe, daß die Copolymerisate (A) und (B) zusammen bis zu 65 Gew.% solcher Alkyl-(meth)acrylate (II) als Aufbaukomponente enthalten, deren Homopolymerisate Glastemperaturen unter 0°C aufweisen und daß mindestens eines der Copolymerisate (A) oder (B) die Monomeren (IV) als Aufbaukomponente enthält, in der Weise hergestellt wird, daß zunächst eines der beiden Copolymerisate (A) oder (B) durch Lösungspolymerisation der Aufbaukomponenten hergestellt wird, in der so entstandenen Polymerlösung das andere Copolymerisat durch Lösungspolymerisation erzeugt wird, die Polymermischung dann unter Zusatz von Ammoniak in Wasser dispergiert wird, gegebenenfalls überschüssiges Lösemittel abdestilliert wird und die Dispersion anschließend mit mindestens einem Polyhydrazid (C) versetzt wird.

3. Polymerdispersionen nach Anspruch 1, erhältlich durch Verwendung von 0,1 bis 1 Äquivalent Polyhydrazid (C) pro Äquivalent Carbonylgruppen im Copolymerisat-Gemisch (A und B).

4. Verwendung der Polymerdispersionen gemäß Anspruch 1 bis 3 zur Herstellung von Lacken und Beschichtungsmitteln.

## Claims

1. An aqueous polymer dispersion which has a long shelf life and is obtainable by dispersing a mixture of 15-50% by weight of a copolymer (A) of
   (I) 1.5-15% by weight of copolymerizable compounds of 3 to 10 carbon atoms which contain a carboxyl or carboxylic anhydride group,
   (II) 30-98.5% by weight of $C_1$-$C_{20}$-alkyl acrylates or methacrylates,
   (III) 0-60% by weight of vinylaromatics,
   (IV) 0-20% by weight of copolymerizable carbonyl compounds and
   (V) 0-20% by weight of further copolymerizable organic compounds not stated under (I) to (IV) and
   50-85% by weight of a copolymer (B) of
   40-100% by weight of the monomers (II) and
   0-60% by weight of one or more of the monomers (III) to (V),
   with the proviso that the copolymers (A) and (B) together contain, as components, up to 65% by weight of alkyl (meth)acrylates (II) whose homopolymers have glass transition temperatures of less than 0°C, and that one or both of the copolymers (A) and (B) contain the monomers (IV) as components,
   in an organic solvent in a manner such that first one of the two copolymers (A) or (B) is prepared by solution polymerization of the components, the other copolymer is produced in the resulting polymer solution by solution polymerization, the polymer mixture is then dispersed in water by adding ammonia, any excess solvent is distilled off and one or more polyhydrazides (C) are then added to the dispersion.

2. A process for the preparation of an aqueous polymer dispersion as claimed in claim 1, wherein a mixture of
   15-50% by weight of a copolymer (A) of
   (I) 1.5-15% by weight of copolymerizable compounds of 3 to 10 carbon atoms which contain a carboxyl or carboxylic anhydride group,
   (II) 30-98.5% by weight of $C_1$-$C_{20}$-alkyl acrylates or methacrylates,
   (III) 0-60% by weight of vinylaromatics,
   (IV) 0-20% by weight of copolymerizable carbonyl compounds and
   (V) 0-20% by weight of further copolymerizable organic compounds not stated under (I) to (IV) and
   50-85% by weight of a copolymer (B) of
   40-100% by weight of the monomers (II) and
   0-60% by weight of one or more of the monomers (III) to (V),
   with the proviso that the copolymers (A) and (B) together contain, as components, up to 65% by weight of alkyl (meth)acrylates (II) whose homopolymers have glass transition temperatures of less than 0°C, and that one or both of the copolymers (A) and (B) contain the monomers (IV) as components, is prepared in an organic solvent in a manner such that first one of the two copolymers (A) and (B) is prepared by solution polymerization of the components, the other copolymer is produced in the resulting polymer solution by solution polymerization, the polymer mixture is then dispersed in water by adding ammonia, any excess solvent is distilled off and one or more polyhydrazides (C) are then added to the dispersion.

3. A polymer dispersion as claimed in claim 1, obtainable by using from 0.1 to 1 equivalent of polyhydrazide (C) per equivalent of carbonyl groups in the copolymer mixture (A) and (B).

4. Use of a polymer dispersion as claimed in any of claims 1 to 3 for the preparation of finishes and coating materials.

## Revendications

1. Dispersions aqueuses de Polymères, stables à la conservation, que l'on peut obtenir par la dispersion d'un mélange constitué de

   15 a 50% en poids d'un copolymère (A) composé de
   (I) 1,5 a 15% en poids de composés copolymérisables qui comportent de 3 a 10 atomes de carbone et qui contiennent un radical carboxyle ou anhydride d'acide carboxylique,
   (II) 30 a 98,5% en poids de méthacrylates ou d'acrylates d'alkyle en $C_1$ à $C_{20}$,
   (III) 0 à 60% en poids de composés vinylaromatiques,
   (IV) 0 à 20% en poids de composés carbonylés copolymérisables,
   (V) 0 à 20% en poids d'autres composés organiques, copolymérisables, non cités sous (I) à (IV) et
   50 a 85% en poids d'un copolymère (B) composé de
   40 a 100% en poids des monomères (II) et
   0 a 60% en poids d'un ou plusieurs des monomères (III) à (V),

   avec la condition que les copolymères (A) et (B) ensemble contiennent, à titre de composant constitutif, jusqu'a 65% en poids de (méth)acrylates d'alkyle (II) du genre de ceux dont les homopolymères présentent des températures de transition vitreuse inférieures a $0°C$ et qu'au moins l'un des copolymères (A) ou (B) contienne les monomères (IV) à titre de composant constitutif,

   dans un solvant organique, en une manière telle que l'on prépare d'abord l'un des deux copolymères (A) ou (B) par polymérisation en solution des composants constitutifs, l'on obtienne l'autre copolymère par polymérisation en solution dans la solution de polymère ainsi formée, l'on disperse ensuite le mélange de polymères dans de l'eau sous addition d'ammoniac, on élimine éventuellement le solvant excédentaire par distillation et on ajoute ensuite au moins un polyhydrazide (C) à la dispersion.

2. Procédé d'une dispersion aqueuse de polymères selon la revendication 1, caractérisé en ce que l'on prépare, dans un solvant organique,

   15 à 50% en poids d'un copolymère (A) composé de

   (I) 1,5 à 15% en poids de composés copolymérisables qui comportent de 3 à 10 atomes de carbone et qui contiennent un radical carboxyle ou anhydride d'acide carboxylique,
   (II) 30 à 98,5% en poids de méthacrylates ou d'acrylates d'alkyle en $C_1$ à $C_{20}$,
   (III) 0 à 60% en poids de composés vinylaromatiques,
   (IV) 0 à 20% en poids de composés carbonylés copolymérisables,
   (V) 0 à 20% en poids d'autres composés organiques, copolymérisables, non cités sous (I) à (IV) et
   50 à 85% en poids d'un copolymère (B) composé de
   40 à 100% en poids des monomères (II) et
   0 à 60% en poids d'un ou plusieurs des monomères (III) à (V),

   avec la condition que les copolymères (A) et (B) ensemble contiennent, à titre de composant constitutif, jusqu'à 65% en poids de (méth)acrylates d'alkyle (II) du genre de ceux dont les homopolymères présentent des températures de transition vitreuse inférieures à $0°C$ et qu'au moins l'un des copolymères (A) ou (B) contienne les monomères (IV) à titre de composant constitutif,

   en une manière telle que l'on prépare d'abord l'un des deux copolymères (A) ou (B) par polymérisation en solution des composants constitutifs, on obtienne ensuite l'autre copolymère par polymérisation en solution dans la solution de polymère ainsi formée, on disperse ensuite le mélange des polymères dans de l'eau sous addition d'ammoniac, on chasse éventuellement le solvant excédentaire par distillation et on ajoute ensuite au moins un polyhydrazide (C) à la dispersion.

3. Dispersions de polymères suivant la revendication 1, que l'on obtient par l'utilisation de 0,1 à 1 équivalent de polyhydrazide (C) par équivalent de radicaux carbonyle dans le mélange copolymérique (A et B).

4. Utilisation des dispersions de polymères selon l'une quelconque des revendications 1 à 3 pour la fabrication de laques ou émaux et de compositions ou agents de revêtement.